# EUROPÄISCHE PATENTANMELDUNG

(11) **EP 4 375 550 A1**
(43) Veröffentlichungstag der Anmeldung: **29.05.2024**
(21) Anmeldenummer: 23210191.5
(22) Anmeldetag: 15.11.2023
(51) Int. Cl.: F16L 27/10, F16L 27/047

(54) **VERBINDUNGSELEMENT**

(30) Priorität: 22.11.2022 DE 102022130887
(71) Anmelder: VERITAS AG, 63571 Gelnhausen (DE)
(72) Erfinder: HATTASS, Dirk, 63584 Gründau (DE); GROHS, Michael, 63571 Gelnhausen (DE); KARI, Artur, 63762 Großostheim (DE); GEESMANN, Urs, 63571 Gelnhausen (DE)
(74) Vertreter: Patentship Patentanwaltsgesellschaft mbH

(57) **Zusammenfassung**

Verbindungselement (105) für eine Fluidverbindung zwischen zwei Fahrzeugfluidstutzen (101, 103), mit einer Hülse (107), wobei die Hülse (107) einen sich von einer ersten Öffnung (109) aus erstreckenden ersten Aufnahmeraum (113) und einen sich von einer zweiten Öffnung (111) aus erstreckenden zweiten Aufnahmeraum (115) aufweist, wobei die Hülse (107) einen umlaufenden Vorsprung (117) aufweist, welcher eine Verbindungsöffnung (119) der Hülse (107) begrenzt, wobei der erste Aufnahmeraum (113) durch eine erste Innenwandung (121) der Hülse (107) begrenzt ist, welcher einer ersten Außenseite (101-1) des ersten Fahrzeugfluidstutzens (101) zugewandt ist, und wobei der zweite Aufnahmeraum (115) durch eine zweite Innenwandung (123) der Hülse (107) begrenzt ist, welcher einer zweiten Außenseite (103-1) des zweiten Fahrzeugfluidstutzens (103) zugewandt ist, wobei die erste Innenwandung (121) eine erste Verjüngung (129) aufweist, welche sich in Richtung des umlaufenden Vorsprungs (117) verjüngt, und ausgebildet ist, den ersten Fahrzeugfluidstutzen (101) in dem ersten Aufnahmeraum (113) zu positionieren, und wobei die zweite Innenwandung (123) eine zweite Verjüngung (131) aufweist, welche sich in Richtung des umlaufenden Vorsprungs (117) verjüngt, und ausgebildet ist, den zweiten Fahrzeugfluidstutzen (103) in dem zweiten Aufnahmeraum (115) zu positionieren, und wobei die erste und zweite Verjüngung (129, 131) ausgebildet sind, eine Bewegung des jeweiligen ersten und zweiten Fahrzeugfluidstutzens (103) innerhalb des jeweiligen ersten und zweiten Aufnahmeraums (113, 115) zuzulassen, um einen Toleranzausgleich zwischen dem ersten und zweiten Fahrzeugfluidstutzen (101, 103) zu ermöglichen.

## Beschreibung

Die vorliegende Erfindung betrifft ein Verbindungselement zum Herstellen einer Fluidverbindung zwischen zwei Fahrzeugfluidstutzen, sowie eine Fahrzeugfluidverbindungsanordnung umfassend ein Verbindungselement und einen ersten und zweiten Fahrzeugfluidstutzen.

In einem herkömmlichen Fahrzeug wird eine Vielzahl von Fluidverbindungen benötigt, um unterschiedliche Arten von Fluid zu leiten. Insbesondere wird in einem elektrisch betriebenen Fahrzeug ein durch Kühlmittel durchströmtes Kühlsystem benötigt, um die elektrischen Batteriemodule des elektrisch betriebenen Fahrzeugs auf eine optimale Betriebstemperatur zu temperieren. Hierbei umfassen die Fluidverbindungen insbesondere Fahrzeugfluidstutzen, welche benachbarten elektrischen Batteriemodulen zugeordnet sind.

Aufgrund des räumlich begrenzten Bauraums in einem Fahrzeug müssen entsprechende Fluidverbindungen neben der wirksamen fluidtechnischen Abdichtung der fluidtechnischen Verbindung zwischen den Fahrzeugfluidstutzen innerhalb des jeweiligen Verbindungselements auch noch einen gewissen Toleranzausgleich zwischen den beiden Fahrzeugfluidstutzen ermöglichen.

Die Druckschrift EP 3 279 539 B1 offenbart eine Haltemanschette für eine Verbindungseinrichtung.

Es ist die der Erfindung zugrundeliegende Aufgabe, ein Verbindungselement und eine Fahrzeugfluidverbindungsanordnung für eine Fluidverbindung anzugeben, welches, bzw. welche vorteilhafte Eigenschaften aufweist und einfach zu fertigen ist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verbindungselement zum Herstellen einer Fluidverbindung zwischen zwei Fahrzeugfluidstutzen gelöst, mit einer Hülse, welche eine erste Öffnung zum Einführen eines ersten Fahrzeugfluidstutzens begrenzt, und welche eine der ersten Öffnung abgewandte zweite Öffnung zum Einführen eines zweiten Fahrzeugfluidstutzens begrenzt, wobei die Hülse einen sich von der ersten Öffnung aus erstreckenden ersten Aufnahmeraum zum Aufnehmen des ersten Fahrzeugfluidstutzens und einen sich von der zweiten Öffnung aus erstreckenden zweiten Aufnahmeraum zum Aufnehmen des zweiten Fahrzeugfluidstutzens aufweist, wobei die Hülse einen umlaufenden Vorsprung aufweist, welcher eine Verbindungsöffnung der Hülse begrenzt, wobei die Verbindungsöffnung den ersten Aufnahmeraum mit dem zweiten Aufnahmeraum fluidtechnisch verbindet, wobei der erste Aufnahmeraum durch eine erste Innenwandung der Hülse begrenzt ist, welcher einer ersten Außenseite des ersten Fahrzeugfluidstutzens zugewandt ist, und wobei der zweite Aufnahmeraum durch eine zweite Innenwandung der Hülse begrenzt ist, welcher einer zweiten Außenseite des zweiten Fahrzeugfluidstutzens zugewandt ist, wobei die erste Innenwandung eine erste Verjüngung aufweist, welche sich in Richtung des umlaufenden Vorsprungs verjüngt, und ausgebildet ist, den ersten Fahrzeugfluidstutzen in dem ersten Aufnahmeraum zu positionieren, und wobei die zweite Innenwandung eine zweite Verjüngung aufweist, welche sich in Richtung des umlaufenden Vorsprungs verjüngt, und ausgebildet ist, den zweiten Fahrzeugfluidstutzen in dem zweiten Aufnahmeraum zu positionieren, und wobei die erste und zweite Verjüngung ausgebildet sind, eine Bewegung des jeweiligen ersten und zweiten Fahrzeugfluidstutzens innerhalb des jeweiligen ersten und zweiten Aufnahmeraums zuzulassen, um einen Toleranzausgleich zwischen dem ersten und zweiten Fahrzeugfluidstutzen zu ermöglichen.

Dadurch wird beispielsweise der technische Vorteil erreicht, dass durch das Verbindungselement eine stabile und insbesondere fluiddichte Verbindung zwischen dem ersten und zweiten Fahrzeugfluidstutzen sichergestellt wird, welche einfach zu montieren ist, und hohen Druckbelastungen vorteilhaft widerstehen kann, ohne dass Fluid austritt.

Die jeweilige sich in Richtung des umlaufenden Vorsprungs verjüngende Verjüngung stellt hierbei sicher, dass der jeweilige Fahrzeugfluidstutzen beim Einführen in den jeweiligen Aufnahmeraum vorteilhaft in der Hülse positioniert, insbesondere zentriert wird, so dass aus dem ersten Fahrzeugfluidstutzen austretendes Fluid durch die Verbindungsöffnung der Hülse wirksam in dem zweiten Fahrzeugfluidstutzen geführt werden kann und umgekehrt.

Die erste Verjüngung ist insbesondere als die erste Innenwandung vollständig umlaufende erste Verjüngung ausgebildet. Die zweite Verjüngung ist insbesondere als die zweite Innenwandung vollständig umlaufende zweite Verjüngung ausgebildet.

Insbesondere ist die erste Verjüngung ausgebildet, zumindest abschnittsweise formschlüssig an dem ersten Fahrzeugfluidstutzen anzuliegen, und/oder insbesondere ist die zweite Verjüngung ausgebildet, zumindest abschnittsweise formschlüssig an dem zweiten Fahrzeugfluidstutzen anzuliegen. Insbesondere wird beim Montieren sich die in der Montagerichtung erstreckende jeweilige Verjüngung an den jeweiligen Fahrzeugfluidstutzen teilweise abschnittsweise formschlüssig anlegen und auf diesem aufgrund der sich verjüngenden Form der jeweiligen Verjüngung abrollen. Insbesondere nach der Montage kann aufgrund des zugelassenen Toleranzausgleichs auch beide Verjüngung an beiden Fahrzeugfluidstutzen abschnittsweise formschlüssig anlegen, bzw. je nach Tolerant auch von den beiden Fahrzeugfluidstutzen zumindest abschnittsweise beabstandet angeordnet sein.

Insbesondere weist der erste und zweite Fahrzeugfluidstutzen eine Hülsenform auf.

Insbesondere ist der erste und zweite Fahrzeugfluidstutzen aus einem nicht verformbaren Material geformt, insbesondere aus einem Thermoplast-Kunststoff oder aus einem Metall.

Insbesondere ist das Verbindungselement aus einem nicht verformbaren Material geformt, insbesondere aus einem Thermoplast-Kunststoff oder aus einem Metall.

Zudem wird ein Toleranzausgleich zwischen dem ersten und zweiten Fahrzeugfluidstutzen dadurch sichergestellt, dass eine Bewegung des jeweiligen ersten, bzw. zweiten Fahrzeugfluidstutzens innerhalb der jeweiligen ersten, bzw. zweiten Aufnahmeraums ermöglicht wird.

Die entsprechende Bewegung des jeweiligen ersten, bzw. zweiten Fahrzeugfluidstutzens innerhalb der jeweiligen ersten, bzw. zweiten Aufnahmeraums wird insbesondere dadurch ermöglicht, dass die erste, bzw. zweite Verjüngung an die entsprechende Außenseite des ersten, bzw, zweiten Fahrzeugfluidstutzens angepasst ist.

Insbesondere sind die erste und zweite Verjüngung ausgebildet, eine Bewegung des jeweiligen ersten und zweiten Fahrzeugfluidstutzens innerhalb des jeweiligen ersten und zweiten Aufnahmeraums entlang einer axialen Richtung des Verbindungselements zuzulassen, um eine Stauchung, bzw. Streckung der ersten und zweiten Fahrzeugfluidstutzens innerhalb des Verbindungselements zu ermöglichen.

Insbesondere sind die erste und zweite Verjüngung ausgebildet, um ein Abwinkeln des jeweiligen ersten und zweiten Fahrzeugfluidstutzens innerhalb der jeweiligen ersten und zweiten Aufnahmeraums zuzulassen, um zu ermöglichen, dass die jeweiligen axialen Erstreckungsachsen des ersten und zweiten Fahrzeugfluidstutzens nicht mehr parallel zueinander verlaufen, sondern einen Winkel einschließen.

Insbesondere sind die erste und zweite Verjüngung ausgebildet, um eine Bewegung des jeweiligen ersten und zweiten Fahrzeugfluidstutzens innerhalb der jeweiligen ersten und zweiten Aufnahmeraums entlang einer radialen Richtung des Verbindungselements zuzulassen, um einen Achsversatz der jeweiligen axialen Erstreckungsachsen der ersten und zweiten Fahrzeugfluidstutzens zu ermöglichen.

Insbesondere kann die Bewegung des jeweiligen Fahrzeugfluidstutzens innerhalb des jeweiligen ersten und zweiten Aufnahmeraums beliebige Kombinationen aus Bewegung entlang einer axialen Richtung des Verbindungselements, Bewegung entlang einer radialen Richtung des Verbindungselements und/oder Abwinkeln des jeweiligen Fahrzeugfluidstutzens innerhalb des jeweiligen ersten und zweiten Aufnahmeraums umfassen.

Insbesondere verbindet die erste Öffnung den ersten Aufnahmeraum mit einem Außenraum der Hülse. Insbesondere verbindet die zweite Öffnung den zweiten Aufnahmeraum mit einem Außenraum der Hülse.

Insbesondere ist die Hülse als eine zumindest abschnittsweise umlaufende Hülse ausgebildet.

Insbesondere weist die Hülse einen konzentrischen Querschnitt, insbesondere einen kreisförmigen Querschnitt, auf. Insbesondere ist die Hülse als ein hohlzylinderförmiges Bauteil geformt, welches einen zylinderförmigen Innenraum der Hülse begrenzt.

Die Vorteile des Verbindungselements, bzw. der Fahrzeugfluidverbindungsanordnung gemäß der vorliegenden Erfindung zeichnen sich dadurch aus, dass neben der fluidtechnischen Abdichtung zwischen den jeweiligen ersten und zweiten Fahrzeugfluidstutzen innerhalb des Verbindungselements auch noch durch die Bewegung des jeweiligen ersten, bzw. zweiten Fahrzeugfluidstutzen innerhalb des jeweiligen ersten, bzw. zweiten Aufnahmeraums ein wirksamer Toleranzausgleich sichergestellt werden kann.

In einer vorteilhaften Ausführungsform weist die erste Innenwandung einen ersten Mittenabschnitt auf, welcher zwischen der ersten Öffnung und dem umlaufenden Vorsprung angeordnet ist, und weist die zweite Innenwandung einen zweiten Mittenabschnitt auf, welcher zwischen der zweiten Öffnung und dem umlaufenden Vorsprung angeordnet ist, wobei sich die erste Verjüngung von dem ersten Mittenabschnitt bis zu dem umlaufenden Vorsprung verjüngt, und wobei sich die zweite Verjüngung von dem zweiten Mittenabschnitt bis zu dem umlaufenden Vorsprung verjüngt.

Dadurch wird der technische Vorteil erreicht, dass eine besonders wirksame Aufnahme des jeweiligen ersten, bzw. zweiten Fahrzeugfluidstutzens in dem ersten, bzw. zweiten Aufnahmeraum sichergestellt wird.

Insbesondere reduziert sich der jeweilige Innendurchmesser der ersten und/oder zweiten Verjüngung von einem Durchmesser des Mittenabschnitts der Hülse zu einem geringeren Innendurchmesser des umlaufenden Vorsprungs der Hülse.

In einer vorteilhaften Ausführungsform ist die erste Verjüngung ausgebildet, an einem sich verjüngenden ersten Endabschnitt der ersten Außenseite des ersten Fahrzeugfluidstutzens anzuliegen, um den ersten Fahrzeugfluidstutzen in dem ersten Aufnahmeraum zu positionieren, und/oder ist die zweite Verjüngung ausgebildet, an einem sich verjüngenden zweiten Endabschnitt der zweiten Außenseite des zweiten Fahrzeugfluidstutzens anzuliegen, um den zweiten Fahrzeugfluidstutzen in dem zweiten Aufnahmeraum zu positionieren.

Dadurch wird der technische Vorteil erreicht, dass durch das Anliegen der jeweiligen Verjüngung an der jeweiligen Außenseite des jeweiligen Fahrzeugfluidstutzens ein wirksames Positionieren des jeweiligen Fahrzeugfluidstutzens in dem jeweiligen Aufnahmeraum ermöglicht wird.

Ein Anliegen der ersten oder zweiten Verjüngung an dem ersten oder zweiten Fahrzeugfluidstutzen tritt beispielsweise bei der Montage auf. In der Endposition kann die erste Verjüngung auch vor dem ersten Fahrzeugfluidstutzen und kann die zweite Verjüngung auch von dem zweiten Fahrzeugfluidstutzen beabstandet sein.

In einer vorteilhaften Ausführungsform weist die erste Verjüngung eine erste Verjüngungskrümmung auf, welche identisch zu einer ersten Stutzenkrümmung eines sich verjüngenden ersten Endabschnitts der ersten Außenseite des ersten Fahrzeugfluidstutzens ist, und weist die zweite Verjüngung eine zweite Verjüngungskrümmung auf, welche identisch zu einer zweiten Stutzenkrümmung eines sich verjüngenden zweiten Endabschnitts der zweiten Außenseite des zweiten Fahrzeugfluidstutzens ist.

Dadurch wird der technische Vorteil erreicht, dass durch die identischen Krümmungen der jeweiligen Außenseite des jeweils Fahrzeugfluidstutzens und der jeweiligen Verjüngung, ein wirksames Anliegen der jeweiligen Innenwandung der Hülse an der jeweiligen Außenseite des jeweiligen Fahrzeugfluidstutzens dahingehend ermöglicht wird, dass eine Kugelgelenkartige abschnittsweise Bewegbarkeit des jeweiligen Fahrzeugfluidstutzens in dem jeweiligen Aufnahmeraum sichergestellt wird.

In einer vorteilhaften Ausführungsform weist der umlaufende Vorsprung der Hülse einen Innendurchmesser auf, welcher geringer als ein Außendurchmesser des ersten Fahrzeugfluidstutzens, insbesondere des ersten Stutzendes des ersten Fahrzeugfluidstutzens, und welcher geringer als ein Außendurchmesser des zweiten Fahrzeugfluidstutzens, insbesondere des zweiten Stutzendes des zweiten Fahrzeugfluidstutzens ist, um einen Endanschlag für den ersten Fahrzeugfluidstutzen und für den zweiten Fahrzeugfluidstutzen bereitzustellen, oder weist der umlaufende Vorsprung der Hülse einen Innendurchmesser auf, welcher einem Außendurchmesser des ersten Fahrzeugfluidstutzens, insbesondere des ersten Stutzendes des ersten Fahrzeugfluidstutzens, und welcher einem Außendurchmesser des zweiten Fahrzeugfluidstutzens, insbesondere des zweiten Stutzendes des zweiten Fahrzeugfluidstutzens entspricht, um einen geringen Druckverlust beim Leiten von Fluid zwischen dem ersten und zweiten Fahrzeugfluidstutzens bereitzustellen.

Dadurch wird der technische Vorteil erreicht, dass der entsprechende als Endanschlag ausgebildete umlaufende Vorsprung eine vorteilhafte Endposition des jeweiligen Fahrzeugfluidstutzens in dem jeweiligen Aufnahmeraum sicherstellt.

Da der Endanschlag über die jeweiligen Stutzenden des jeweiligen Fahrzeugfluidstutzens erfolgt, können die entsprechenden außerhalb der Hülse angeordneten Bereiche des jeweiligen Fahrzeugfluidstutzens bei der Positionierung des jeweiligen Fahrzeugfluidstutzens vernachlässigt werden.

Wenn der Innendurchmesser des umlaufenden Vorsprung der Hülse andererseits dem Außendurchmesser des erste und zweiten Fahrzeugfluidstutzens entspricht, wird sichergestellt, dass die beiden Fahrzeugfluidstutzens im Bereich der Verbindungsöffnung aneinander anliegen können, so dass in diesem Fall der Druckverlust beim Leiten von Fluid zwischen dem ersten und zweiten Fahrzeugfluidstutzen reduziert werden kann.

In einer vorteilhaften Ausführungsform ist die erste Verjüngung von der ersten Öffnung beabstandet, und/oder ist die zweiten Verjüngung von der zweiten Öffnung beabstandet.

Dadurch wird der technische Vorteil erreicht, dass der jeweilige Fahrzeugfluidstutzens durch die jeweilige Öffnung abschnittsweise in den jeweiligen Aufnahmeraum eingeführt werden kann, bevor durch die jeweilige Verjüngung eine entsprechende Positionierung, insbesondere Zentrierung des jeweiligen Fahrzeugfluidstutzens vorgenommen wird.

In einer vorteilhaften Ausführungsform weist die Hülse einen ersten Öffnungsrand auf, welcher die erste Öffnung begrenzt, und weist die Hülse einen zweiten Öffnungsrand auf, welcher die zweite Öffnung begrenzt, wobei insbesondere ein Durchmesser des ersten und zweiten Öffnungsrands größer ist als ein Innendurchmesser der Verbindungsöffnung der Hülse.

Dadurch wird der technische Vorteil erreicht, dass ein wirksames Einführen des jeweiligen Fahrzeugfluidstutzens durch den jeweiligen Öffnungsrand in den jeweiligen Aufnahmeraum ermöglicht wird, bis zu dem umlaufenden Vorsprung der Hülse.

In einer vorteilhaften Ausführungsform weist die Hülse eine erste Einführschräge auf, welche sich von dem ersten Öffnungsrand aus in Richtung des ersten Aufnahmeraums verjüngt, um ein Einführen des ersten Fahrzeugfluidstutzens in den ersten Aufnahmeraum zu erleichtern, und weist die Hülse eine zweite Einführschräge auf, welche sich von dem zweiten Öffnungsrand aus in Richtung des zweiten Aufnahmeraums verjüngt, um ein Einführen des zweiten Fahrzeugfluidstutzens in den zweiten Aufnahmeraum zu erleichtern.

Dadurch wird der technische Vorteil erreicht, dass die Einführschrägen das Einführen des jeweiligen Fahrzeugfluidstutzens in den jeweiligen Aufnahmeraum vorteilhaft erleichtern.

In einer vorteilhaften Ausführungsform ist in der ersten Innenwandung, insbesondere in einem ersten Mittenabschnitt, welcher zwischen der ersten Öffnung und dem umlaufenden Vorsprung angeordnet ist, eine erste Dichtungsaufnahme zum Aufnehmen eines ersten Dichtelements, insbesondere O-Ring, Blockdichtring oder Zweikomponenten-Silikondichtring, geformt, und/oder ist in der zweiten Innenwandung, insbesondere in einem zweiten Mittenabschnitt, welcher zwischen der zweiten Öffnung und dem umlaufenden Vorsprung angeordnet ist, eine zweiten Dichtungsaufnahme zum Aufnehmen eines zweiten Dichtelements, insbesondere O-Ring, Blockdichtring oder Zweikomponenten-Silikondichtring, geformt.

Dadurch wird beispielsweise der technische Vorteil erreicht, dass das in der jeweiligen Dichtungsaufnahme aufgenommene jeweilige Dichtelement, insbesondere O-Ring, Blockdichtring oder Zweikomponenten-Silikondichtring, eine wirksame fluidtechnische Abdichtung zwischen der Hülse und dem jeweiligen Fahrzeugfluidstutzen sicherstellt.

In einer vorteilhaften Ausführungsform ist die erste und/oder zweite Dichtungsaufnahme jeweils als eine Nut geformt, welche insbesondere neben einer jeweiligen ersten und/oder zweiten Einführschräge in der jeweiligen ersten und/oder zweiten Innenwandung der Hülse angeordnet ist.

Dadurch wird beispielsweise der technische Vorteil erreicht, dass eine wirksame fluidtechnische Abdichtung insbesondere in der Nähe der jeweiligen Einführschräge sichergestellt ist.

In einer vorteilhaften Ausführungsform ist die Hülse einstückig ausgebildet.

Dadurch wird beispielsweise der technische Vorteil erreicht, dass eine einstückige Ausbildung der Hülse eine einfache und kostengünstige Fertigung ermöglicht.

In einer vorteilhaften Ausführungsform ist die Hülse mehrteilig ausgebildet, wobei insbesondere ein erstes Teil der Hülse den umlaufenden Vorsprung, die erste Verjüngung der ersten Innenwandung, die zweite Verjüngung der zweiten Innenwandung, insbesondere den ersten Mittenabschnitt, und insbesondere den zweiten Mittenabschnitt aufweist, wobei insbesondere ein zweites Teil der Hülse den ersten Öffnungsrand aufweist, wobei insbesondere ein drittes Teil der Hülse den zweiten Öffnungsrand aufweist, wobei das erste Teil der Hülse mit dem zweiten Teil der Hülse stoffschlüssig oder kraftschlüssig, insbesondere durch eine Clipverbindung, verbunden ist, und wobei das erste Teil der Hülse mit dem dritten Teil der Hülse stoffschlüssig oder kraftschlüssig, insbesondere durch eine Clipverbindung, verbunden ist.

Dadurch wird beispielsweise der technische Vorteil erreicht, dass eine mehrteilige Ausführung der Hülse insbesondere bei Vorliegen einer Dichtungsaufnahmenut den Vorteil hat, dass hierbei durch das nachträgliche Anbringen des zweiten und dritten Teils am ersten Teil, die Verwendung eines entsprechenden Klappkerns bei der Herstellung vermieden wird.

In einer vorteilhaften Ausführungsform ist die Hülse als ein Spritzgussformteil geformt, und/oder ist die Hülse aus einem Thermoplasten, insbesondere Polyamid, oder einem Metall, insbesondere Aluminium oder Stahl, geformt.

Dadurch wird beispielsweise der technische Vorteil erreicht, dass eine als Spritzgussformteil ausgebildete Hülse besonders einfach und kostengünstig herstellbar ist. Ist die Hülse insbesondere aus einem Thermoplasten, insbesondere Polyamid, oder einem Metall, insbesondere Aluminium oder Stahl, geformt, wird nicht nur eine ausreichende mechanische Stabilität der Hülse ermöglicht, sondern auch sichergestellt, dass eine wirksame chemische Beständigkeit gegenüber dem durch die Fahrzeugfluidstutzen geleiteten Fluid erreicht wird.

Gemäß einem zweiten Aspekt der Erfindung wird die Aufgabe durch eine Fahrzeugfluidverbindungsanordnung gelöst, umfassend ein Verbindungselement nach dem ersten Aspekt, einen ersten Fahrzeugfluidstutzen und einen zweiten Fahrzeugfluidstutzen, wobei der erste Fahrzeugfluidstutzen in dem ersten Aufnahmeraum bewegbar aufgenommen ist, wobei der zweite Fahrzeugfluidstutzen in dem zweiten Aufnahmeraum bewegbar aufgenommen ist, um einen Toleranzausgleich zwischen dem ersten und zweiten Fahrzeugfluidstutzen zu ermöglichen.

Dadurch wird beispielsweise der technische Vorteil erreicht, dass eine wirksame fluiddichte Verbindung zwischen der ersten und zweiten Fahrzeugfluidstutzen mit einem wirksamen Toleranzausgleich sichergestellt werden kann.

Die Verbindung zwischen der ersten und zweiten Fahrzeugfluidstutzen ist insbesondere als eine fluiddichte Verbindung ausgebildet, so dass durch die erste und zweite Fahrzeugfluidstutzen strömendes Fluid nicht aus dem Verbindungselement austreten kann.

Insbesondere umfasst die Verbindung zwischen dem ersten und zweiten Fahrzeugfluidstutzen eine lösbare Verbindung zwischen der ersten und zweiten Fahrzeugfluidstutzen, welche wieder gelöst werden kann, insbesondere durch ein Auseinanderziehen der Hülse, beispielsweise durch ein geeignetes Werkzeug, und/oder durch eine Demontage der an den Fahrzeugfluidstutzen angebundenen Bauteile.

Die Bewegbarkeit des jeweiligen Fahrzeugfluidstutzens in dem jeweiligen Aufnahmeraum stellt einen wirksamen Toleranzausgleich zwischen den ersten und zweiten Fahrzeugfluidstutzens sicher.

In einer vorteilhaften Ausführungsform ist der jeweilige Fahrzeugfluidstutzen innerhalb des jeweiligen Aufnahmeraums entlang einer axialen Richtung des Verbindungselements bewegbar aufgenommen, um ein Strecken und Stauchen der Fahrzeugfluidverbindungsanordnung zu ermöglichen, und/oder ist der jeweilige Fahrzeugfluidstutzen innerhalb des jeweiligen Aufnahmeraums entlang einer radialen Richtung des Verbindungselements bewegbar aufgenommen, um einen Achsversatz zwischen dem ersten und zweiten Fahrzeugfluidstutzen zu ermöglichen, und/oder ist der jeweilige Fahrzeugfluidstutzen innerhalb des jeweiligen Aufnahmeraums abwinkelbar angeordnet ist, um zu ermöglichen, dass die jeweiligen axialen Erstreckungsachsen des ersten und zweiten Fahrzeugfluidstutzen winklig zueinander verlaufen.

Dadurch wird beispielsweise der technische Vorteil erreicht, dass ein wirksamer Toleranzausgleich zwischen den beiden Fahrzeugfluidstutzen sichergestellt wird.

Die in Bezug auf das Verbindungselement gemäß dem ersten Aspekt angeführten vorteilhaften Ausführungsformen gelten ebenso als vorteilhafte Ausführungsformen der Fahrzeugfluidverbindungsanordnung gemäß dem zweiten Aspekt.

Ebenso gelten die vorteilhaften Ausführungsformen der Fahrzeugfluidverbindungsanordnung gemäß dem zweiten Aspekt als vorteilhaften Ausführungsformen für das Verbindungselement gemäß dem ersten Aspekt.

Ausführungsbeispiele der Erfindung sind in den Zeichnungen dargestellt und werden im Folgenden näher beschrieben.

Es zeigen:
- Fig. 1: eine perspektivische Ansicht einer Fahrzeugfluidverbindungsanordnung gemäß einer Ausführungsform;
- Fig. 2: eine weitere perspektivische Ansicht der in Fig. 1 dargestellten Fahrzeugfluidverbindungsanordnung mit einem Achsversatz der Fahrzeugfluidstutzen;
- Fig. 3: eine perspektivische Ansicht eines Verbindungselements einer Fahrzeugfluidverbindungsanordnung gemäß einer weiteren Ausführungsform; und
- Figs. 4A-4C: perspektivische Ansichten von Verbindungselementen einer Fahrzeugfluidverbindungsanordnung gemäß weiterer Ausführungsformen.

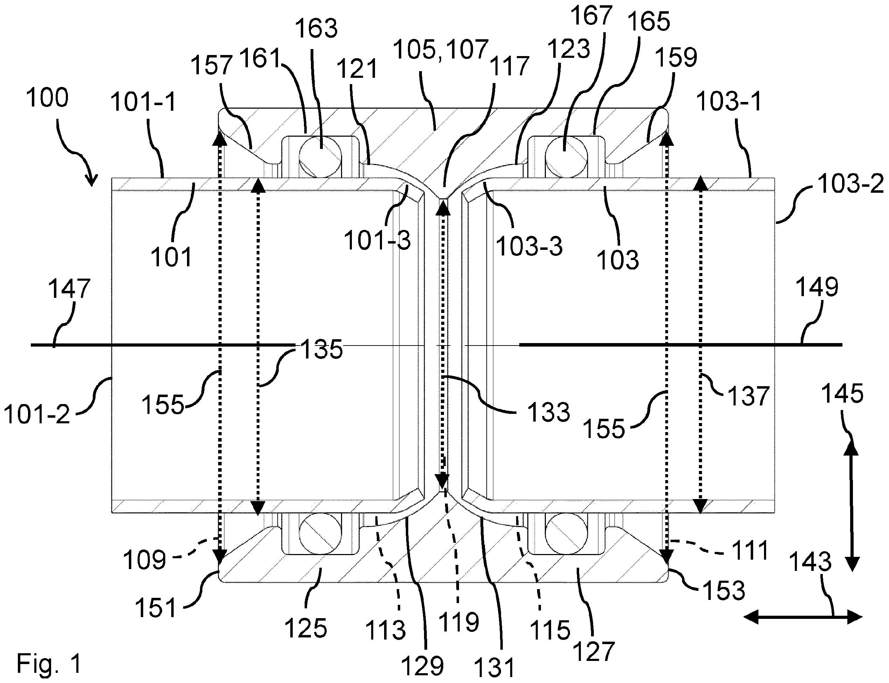

Die Fig. 1 zeigt eine perspektivische Ansicht einer Fahrzeugfluidverbindungsanordnung 100 umfassend einen ersten Fahrzeugfluidstutzen 101, einen zweiten Fahrzeugfluidstutzen 103, sowie ein Verbindungselement 105 zum Herstellen einer Fluidverbindung zwischen dem ersten und zweiten Fahrzeugfluidstutzen 101, 103. In der Fig. 1 ist eine Schnittdarstellung der Fahrzeugfluidverbindungsanordnung 100 gezeigt.

Die Fahrzeugfluidverbindungsanordnung 100 gemäß der vorliegenden Erfindung dient zum Herstellen einer Fluidverbindung in einer Vielzahl von fluidführenden Systemen eines Fahrzeuges. Das Fahrzeugfluidverbindungsanordnung 100 gemäß der vorliegenden Erfindung kann zur fluidtechnischen Verbindung von Kraftstoff-, Kühlflüssigkeits-, Ladeluft-, Bremsflüssigkeits-, Wasser-, SCR-, und/oder Getriebeölleitungen in Fahrzeugen eingesetzt werden. Das Fahrzeugfluidverbindungsanordnung 100 kann auch beispielsweise zur fluidtechnischen Verbindung in einem Kühlsystem eingesetzt werden, welches zur Kühlung von Batteriezellen in einem elektrisch angetriebenen Fahrzeug verwendet wird.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch fluidtechnische Schnittstellen miteinander verbunden werden, um eine wirksame Leitung von Fluid sicherzustellen. Hierbei werden an die fluidtechnischen Schnittstellen zwischen einer entsprechenden fluidführenden Leitung und einem entsprechenden Verbindungselement 105 hohe Anforderungen in Bezug auf Stabilität und Fluiddichtigkeit gestellt.

Insbesondere ist gemäß der in Fig. 1 dargestellten Ausführungsform der erste Fahrzeugfluidstutzen 101 direkt an ein Kühlsystem zum Kühlen einer ersten Batterieeinheit mit Batteriezellen angeschlossen, und ist der zweiten Fahrzeugfluidstutzen 103 direkt an ein Kühlsystem zum Kühlen einer zur ersten Batterieeinheit benachbart angeordneten zweiten Batterieeinheit mit Batteriezellen angeschlossen, so dass der erste und zweite Fahrzeugfluidstutzen 101, 103 zum Leiten von Kühlflüssigkeit ausgebildet ist, wobei hierbei das Verbindungselement 105 zum Herstellen einer fluiddichten, insbesondere flüssigkeitsdichten, Verbindung zwischen den Fahrzeugfluidstutzen 101, 103 ausgebildet ist.

Hierbei ist das Verbindungselement 105, der erste Fahrzeugfluidstutzen 101, sowie der zweite Fahrzeugfluidstutzen 103 insbesondere aus einem Thermoplast-Kunststoff, insbesondere Polyamid geformt, wobei insbesondere Glasfasern zur Verstärkung in den Thermoplast-Kunststoff eingebracht sind.

Das Verbindungselement 105 umfasst eine Hülse 107, welche eine erste Öffnung 109 zum Einführen des ersten Fahrzeugfluidstutzens 101 begrenzt, und welches eine der ersten Öffnung 109 abgewandte zweite Öffnung 111 zum Einführen des zweiten Fahrzeugfluidstutzens 103 begrenzt.

Die Hülse 107 weist ferner einen sich von der ersten Öffnung 109 aus erstreckenden ersten Aufnahmeraum 113 zum Aufnehmen des ersten Fahrzeugfluidstutzens 101 und einen sich von der zweiten Öffnung 111 aus erstreckenden zweiten Aufnahmeraum 115 zum Aufnehmen des zweiten Fahrzeugfluidstutzens 103 auf.

Die Hülse 107 weist ferner einen umlaufenden Vorsprung 117 auf, welcher eine Verbindungsöffnung 119 der Hülse 107 begrenzt, wobei die Verbindungsöffnung 119 den ersten Aufnahmeraum 113 mit dem zweiten Aufnahmeraum 115 fluidtechnisch verbindet.

Hierbei ist der erste Aufnahmeraum 113 durch eine erste Innenwandung 121 der Hülse 107 begrenzt, welche einer ersten Außenseite 101-1 des ersten Fahrzeugfluidstutzens 101 zugewandt ist. Hierbei ist der zweite Aufnahmeraum 115 durch eine zweite Innenwandung 123 der Hülse 107 begrenzt, welche einer zweiten Außenseite 103-1 des zweiten Fahrzeugfluidstutzens 103 zugewandt ist.

Die erste Innenwandung 121 weist einen ersten Mittenabschnitt 125 auf, welcher zwischen der ersten Öffnung 109 und dem umlaufenden Vorsprung 117 angeordnet ist. Die zweite Innenwandung 123 weist einen zweiten Mittenabschnitt 127 auf, welcher zwischen der zweiten Öffnung 111 und dem umlaufenden Vorsprung 117 angeordnet ist.

Die erste Innenwandung 121 weist eine die erste Innenwandung 121 erste Verjüngung 129 auf, welche sich in Richtung des umlaufenden Vorsprungs 117 verjüngt. Die zweite Innenwandung 123 weist eine die zweite Innenwandung 123 umlaufende zweite Verjüngung 131 auf, welche sich in Richtung des umlaufenden Vorsprungs 117 verjüngt.

Hierbei ist die erste Verjüngung 129 insbesondere von der ersten Öffnung 109 beabstandet und ist die zweite Verjüngung 131 insbesondere von der zweiten Öffnung 111 beabstandet.

Insbesondere verjüngt sich die erste Verjüngung 129 von dem ersten Mittenabschnitt 125 bis zu dem umlaufenden Vorsprung 117, und verjüngt sich die zweite Verjüngung 131 von dem zweiten Mittenabschnitt 127 bis zu dem umlaufenden Vorsprung 117.

Die erste Verjüngung 129 ist ausgebildet, den ersten Fahrzeugfluidstutzen 101 in dem ersten Aufnahmeraum 113 zu positionieren, und die zweite Verjüngung 131 ist ausgebildet, den zweiten Fahrzeugfluidstutzen 103 in dem zweiten Aufnahmeraum 115 zu positionieren.

Somit stellt die erste Verjüngung 129, bzw. zweite Verjüngung 131 sicher, dass der in den ersten Aufnahmeraum 113, bzw. zweiten Aufnahmeraum 115 eingeführte erste Fahrzeugfluidstutzen 101, bzw. zweite Fahrzeugfluidstutzen 103 entlang der ersten Verjüngung 129, bzw. entlang der zweiten Verjüngung 131 wirksam geführt wird, um die in Fig. 1 dargestellte Endposition des ersten, bzw. zweiten Fahrzeugfluidstutzens 101, 103 zu erreichen.

Hierbei weist der umlaufende Vorsprung 117 der Hülse 107 insbesondere einen Innendurchmesser 133 auf, welcher geringer als ein Außendurchmesser 135 des ersten Fahrzeugfluidstutzens 101, insbesondere eines ersten Stutzendes 101-2 des ersten Fahrzeugfluidstutzens 101, und welcher geringer als ein Außendurchmesser 137 des zweiten Fahrzeugfluidstutzens 103, insbesondere des zweiten Stutzendes 103-2 des zweiten Fahrzeugfluidstutzens 103 ist. Somit stellt der umlaufende Vorsprung 117 der Hülse 107 insbesondere einen Endanschlag für den ersten Fahrzeugfluidstutzen 101 und für den zweiten Fahrzeugfluidstutzen 103 bereit.

Aufgrund der nur minimalen Verschiebbarkeit der Hülse 107 und der Fahrzeugfluidstutzen 101, 103 wird somit eine wirksame Positionierung sichergestellt, und zudem ein geringes Volumen der Aufnahmeräume 111, 113 in Bezug auf eine vorteilhafte Dichtungslänge zwischen den beiden Fahrzeugfluidstutzen 101, 103 bereitgestellt.

Die erste und zweite Verjüngung 129, 131 sind ferner ausgebildet, eine Bewegung des jeweiligen ersten und zweiten Fahrzeugfluidstutzens 101, 103 innerhalb des jeweiligen ersten und zweiten Aufnahmeraums 113, 115 zuzulassen, um einen Toleranzausgleich zwischen dem ersten und zweiten Fahrzeugfluidstutzen 101, 103 zu ermöglichen.

Dies wird dadurch erreicht, dass die erste Verjüngung 129 ausgebildet ist, an einem sich verjüngenden ersten Endabschnitt 101-3 der ersten Außenseite 101-1 des ersten Fahrzeugfluidstutzens 101 anzuliegen, um den ersten Fahrzeugfluidstutzen 101 in dem ersten Aufnahmeraum 113 zu positionieren, und wobei die zweite Verjüngung 131 ausgebildet ist, an einem sich verjüngenden zweiten Endabschnitt 103-3 der zweiten Außenseite 103-1 des zweiten Fahrzeugfluidstutzens 103 anzuliegen, um den zweiten Fahrzeugfluidstutzen 103 in dem zweiten Aufnahmeraum 115 zu positionieren.

Hierbei weist die erste Verjüngung 129 insbesondere eine erste Verjüngungskrümmung auf, welche identisch zu einer ersten Stutzenkrümmung des sich verjüngenden ersten Endabschnitts 101-3 der ersten Außenseite 101-1 des ersten Fahrzeugfluidstutzens 101 ist. Hierbei weist die zweite Verjüngung 131 insbesondere eine zweite Verjüngungskrümmung auf, welche identisch zu einer zweiten Stutzenkrümmung des sich verjüngenden zweiten Endabschnitts 103-3 der zweiten Außenseite 103-1 des zweiten Fahrzeugfluidstutzens 103 ist.

Somit stellt die jeweiligen Kontakt zwischen der ersten Verjüngung 129 und dem ersten Endabschnitt 101-3, bzw. zwischen der zweiten Verjüngung 131 und dem zweiten Endabschnitt 103-3 im Rahmen einer Funktion eines Kugelgelenks eine vorteilhafte Bewegung des jeweiligen ersten und zweiten Fahrzeugfluidstutzens 101, 103 in dem jeweiligen Aufnahmeraum 113, 115 sicher, um einen wirksamen Toleranzausgleich zwischen dem ersten und zweiten Fahrzeugfluidstutzen 101, 103 zuzulassen.

Hierbei ist insbesondere der jeweilige Fahrzeugfluidstutzen 101, 103 innerhalb des jeweiligen Aufnahmeraums 113, 115 entlang einer axialen Richtung 143 des Verbindungselements 105 bewegbar aufgenommen, um ein Strecken und Stauchen der Fahrzeugfluidverbindungsanordnung 100 zu ermöglichen. Alternativ oder zusätzlich is der jeweilige Fahrzeugfluidstutzen 101, 103 innerhalb des jeweiligen Aufnahmeraums 113, 115 entlang einer radialen Richtung 145 des Verbindungselements 105 bewegbar aufgenommen, um einen Achsversatz zwischen dem ersten und zweiten Fahrzeugfluidstutzen 101, 103 zu ermöglichen. Alternativ oder zusätzlich ist der jeweilige Fahrzeugfluidstutzen 101, 103 innerhalb des jeweiligen Aufnahmeraums 113, 115 abwinkelbar angeordnet ist, um zu ermöglichen, dass die jeweiligen axialen Erstreckungsachsen 147, 149 des ersten und zweiten Fahrzeugfluidstutzen 101, 103 winklig zueinander verlaufen.

Beispielsweise bei einen Achsversatz zwischen dem ersten und zweiten Fahrzeugfluidstutzen 101, 103, rollt sich das Verbindungselement 105 aufgrund der im Bereich der jeweiligen Verjüngung 129, 131 Krümmungs-angepassten Form der jeweiligen Innenwandung 121, 123 in die entsprechende toleranzausgleichende Position, und verhindert dadurch die Dichtungslinie über die Dichtflächen der Fahrzeugfluidstutzen 101, 103 hinausgleiten kann.

Somit bilden die jeweiligen Verjüngungen 129, 131 zusammen mit den entsprechend gekrümmten Endabschnitten 101-3, 103-3 der jeweiligen Fahrzeugfluidstutzen 101, 103 eine Art Kugelgelenk, wobei hierbei das Verbindungselement 105 in der Mitte der beiden Fahrzeugfluidstutzen 101, 103 gehalten wird.

Dadurch kann ein wirksamer Toleranzausgleich durch die Fahrzeugfluidverbindungsanordnung 100 sichergestellt werden, welcher insbesondere beim Anordnen der Fahrzeugfluidverbindungsanordnung 100 zwischen Kühleinheiten von benachbarten Batteriemodulen von Vorteil ist.

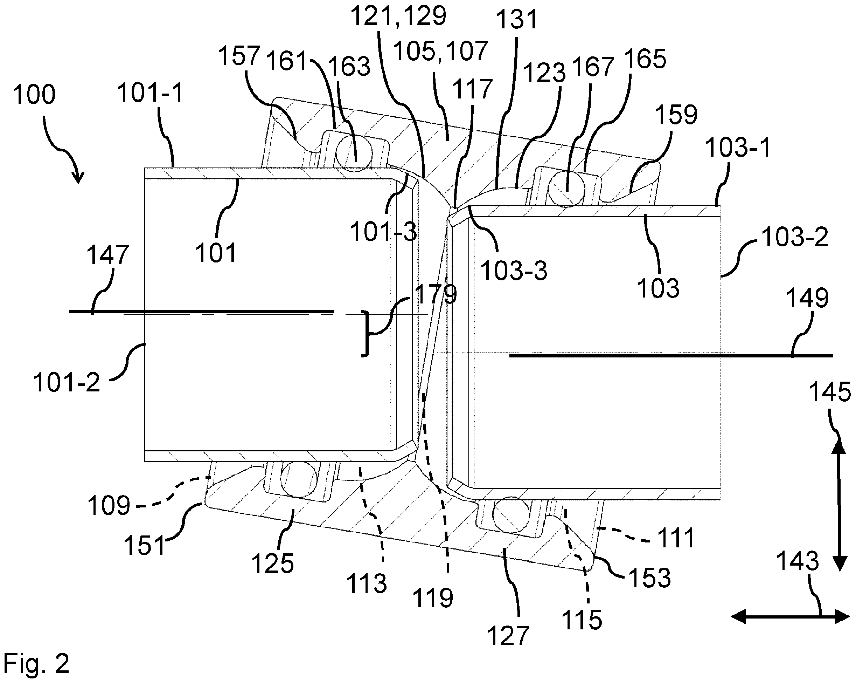

Die Fig. 1 zeigt eine gerade Fahrzeugfluidverbindungsanordnung 100. Für eine Fahrzeugfluidverbindungsanordnung 100, bei der der erste und zweite Fahrzeugfluidstutzen 101, 103 einen Achsversatz aufweisen, wird auf die Fig. 2 verwiesen.

Die Hülse 107 weist ferner einen ersten Öffnungsrand 151 auf, welcher die erste Öffnung 109 begrenzt, und einen zweiten Öffnungsrand 153 auf, welcher die zweite Öffnung 111 begrenzt, und wobei insbesondere ein Durchmesser 155 des ersten und zweiten Öffnungsrands 151, 153 größer ist als ein Innendurchmesser 133 der Verbindungsöffnung 119 der Hülse 107.

Die Hülse 107 weist hierbei eine erste Einführschräge 157 auf, welche sich von dem ersten Öffnungsrand 151 aus in Richtung des ersten Aufnahmeraums 113 verjüngt, um ein Einführen des ersten Fahrzeugfluidstutzens 101 in den ersten Aufnahmeraum 113 zu erleichtern. Die Hülse 107 weist hierbei eine zweite Einführschräge 159 auf, welche sich von dem zweiten Öffnungsrand 153 aus in Richtung des zweiten Aufnahmeraums 115 verjüngt, um ein Einführen des zweiten Fahrzeugfluidstutzens 103 in den zweiten Aufnahmeraum 115 zu erleichtern.

Wie aus der Fig. 1 ferner hervorgeht, ist insbesondere in der ersten Innenwandung 121, insbesondere in dem ersten Mittenabschnitt 125, eine erste Dichtungsaufnahme 161 zum Aufnehmen eines ersten Dichtelements 163, insbesondere O-Ring, Blockdichtring oder Zweikomponenten-Silikondichtring, geformt, und ist insbesondere in der zweiten Innenwandung 123, insbesondere in dem zweiten Mittenabschnitt 125 eine zweiten Dichtungsaufnahme 165 zum Aufnehmen eines zweiten Dichtelements 167, insbesondere O-Ring, Blockdichtring oder Zweikomponenten-Silikondichtring, geformt.

Hierbei ist insbesondere die erste und/oder zweite Dichtungsaufnahme 161, 165 jeweils als eine Nut geformt, welche insbesondere neben einer jeweiligen ersten und/oder zweiten Einführschräge 157, 159 in der jeweiligen ersten und/oder zweiten Innenwandung 121, 123 der Hülse 107 angeordnet ist.

Somit wird eine wirksame fluidtechnische Abdichtung erreicht.

Die in Fig. 1 dargestellte Hülse 107 ist insbesondere einstückig ausgebildet.

Fig. 2 zeigt eine weitere perspektivische Ansicht der in Fig. 1 dargestellten Fahrzeugfluidverbindungsanordnung mit einem Achsversatz der Fahrzeugfluidstutzen.

Wie aus der Fig. 2 hervorgeht, können die Fahrzeugfluidstutzen 101, 103 bis zu einem gewissen Grad entlang einer radialen Richtung 145 des Verbindungselements 105 zueinander achsversetzt werden, so dass hierbei ein besonders wirksamer Toleranzausgleich sichergestellt werden kann.

Der Achsversatz 179 definiert hierbei einen radialen Abstand zwischen der ersten axialen Erstreckungsachse 147 des ersten Fahrzeugfluidstutzens 101 und der zweiten axialen Erstreckungsachse 149 des zweiten Fahrzeugfluidstutzens 103.

Auch wenn dies in der Fig. 2 nicht dargestellt ist, kann der jeweilige Fahrzeugfluidstutzen 101, 103 insbesondere innerhalb des jeweiligen Aufnahmeraums 113, 115 entlang einer axialen Richtung 143 des Verbindungselements 105 bewegbar aufgenommen, um ein zumindest minimales Strecken und Stauchen der Fahrzeugfluidverbindungsanordnung 100 zu ermöglichen.

Auch wenn dies in der Fig. 2 nicht dargestellt ist, kann der Fahrzeugfluidstutzen 101, 103 innerhalb des jeweiligen Aufnahmeraums 113, 115 abwinkelbar angeordnet ist, um zu ermöglichen, dass die jeweiligen axialen Erstreckungsachsen 147, 149 des ersten und zweiten Fahrzeugfluidstutzens 101, 103 winklig zueinander verlaufen.

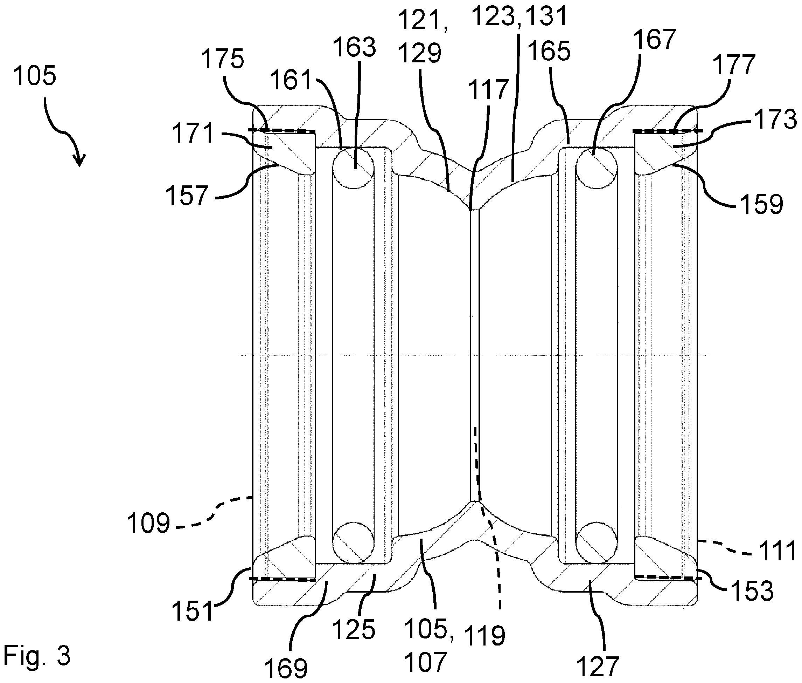

Fig. 3 zeigt eine perspektivische Ansicht eines Verbindungselements einer Fahrzeugfluidverbindungsanordnung gemäß einer weiteren Ausführungsform.

Das in der Fig. 3 dargestellte Verbindungselement 105 weist eine Hülse 107 auf, welche insbesondere mehrteilig ausgebildet ist.

Insbesondere ein erstes Teil 169 der Hülse 107 weist den umlaufenden Vorsprung 117, die erste Verjüngung 129 der ersten Innenwandung 121, die zweite Verjüngung 131 der zweiten Innenwandung 123, den ersten Mittenabschnitt 125, und den zweiten Mittenabschnitt 127 auf. Insbesondere ein zweites Teil 171 der Hülse 107 weist den ersten Öffnungsrand 151 auf, und insbesondere ein drittes Teil 173 der Hülse 107 weist den zweiten Öffnungsrand 153 auf.

Wie anhand der ersten Verbindungslinie 175 schematisch dargestellt ist, ist das erste Teil 169 der Hülse 107 mit dem zweiten Teil 171 der Hülse 107 stoffschlüssig verbunden. Alternativ ist auch eine kraftschlüssige Verbindung, insbesondere Clipverbindung möglich. Wie anhand der zweiten Verbindungslinie 177 schematisch dargestellt ist, ist das dritte Teil 173 der Hülse 107 mit dem ersten Teil 169 der Hülse 107 stoffschlüssig verbunden. Alternativ ist auch eine kraftschlüssige Verbindung, insbesondere Clipverbindung möglich.

Da bei spritzgusstechnisch hergestellten Verbindungselementen 105 die entsprechenden Dichtungsaufnahme hinterschnittig wären, und das Herstellungsverfahren erschweren, kann hierbei durch das nachträgliche Anbringen des zweiten und dritten Teils 171, 173 am ersten Teil 169, die Verwendung eines entsprechenden Klappkerns bei der Herstellung vermieden werden.

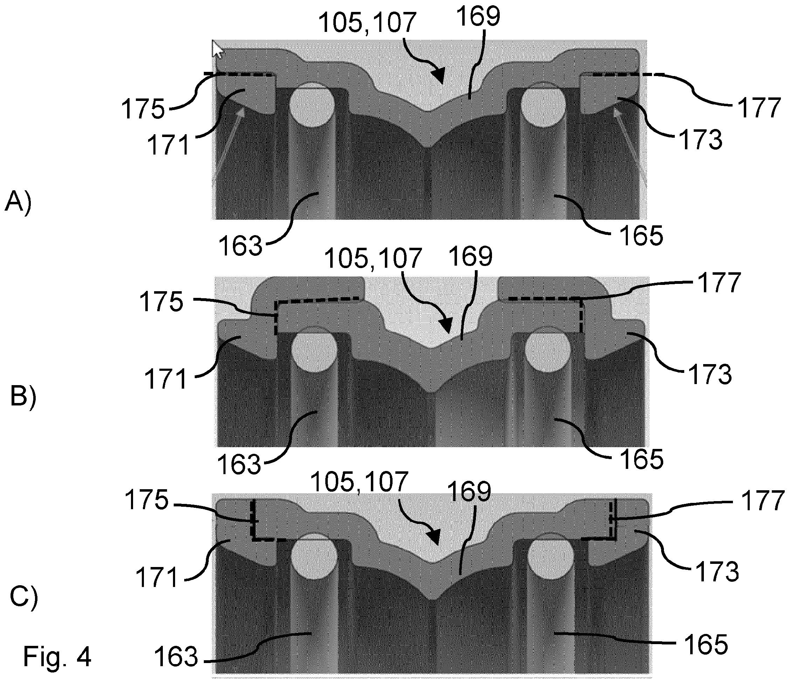

Die Figuren 4A bis 4C zeigen perspektivische Ansichten von Verbindungselementen einer Fahrzeugfluidverbindungsanordnung gemäß weiterer Ausführungsformen.

Ebenso wie das in der Fig. 3 dargestellte Verbindungselement 105 weisen auch die in den Figuren 4A, 4B und 4C dargestellten Verbindungselemente 105 eine Hülse 107 auf, welche insbesondere mehrteilig ausgebildet ist, wobei hierbei jeweils ein erstes Teil 169 der Hülse 107 mit einem zweiten Teil 171 der Hülse 107 und mit einem dritten Teil 173 der Hülse 107 stoffschlüssig verbunden. Alternativ ist auch eine kraftschlüssige Verbindung, insbesondere Clipverbindung möglich.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fahrzeugfluidverbindungsanordnung
- 101: Erster Fahrzeugfluidstutzen
- 101-1: Erste Außenseite des ersten Fahrzeugfluidstutzens
- 101-2: Erstes Stutzende des ersten Fahrzeugfluidstutzens
- 101-3: Erster Endabschnitt der ersten Außenseite des ersten Fahrzeugfluidstutzens
- 103: Zweiter Fahrzeugfluidstutzen
- 103-1: Zweite Außenseite des zweiten Fahrzeugfluidstutzens
- 103-2: Zweites Stutzende des zweiten Fahrzeugfluidstutzens
- 103-3: Zweiter Endabschnitt der zweiten Außenseite des zweiten Fahrzeugfluidstutzens
- 105: Verbindungselement
- 107: Hülse
- 109: Erste Öffnung der Hülse
- 111: Zweite Öffnung der Hülse
- 113: Erster Aufnahmeraum
- 115: Zweiter Aufnahmeraum
- 117: Umlaufender Vorsprung
- 119: Verbindungsöffnung
- 121: Erste Innenwandung der Hülse
- 123: Zweite Innenwandung der Hülse
- 125: Erster Mittenabschnitt
- 127: Zweiter Mittenabschnitt
- 129: Erste Verjüngung
- 131: Zweite Verjüngung
- 133: Innendurchmesser des umlaufenden Vorsprungs
- 135: Außendurchmesser des ersten Fahrzeugfluidstutzens
- 137: Außendurchmesser des zweiten Fahrzeugfluidstutzens
- 143: Axiale Richtung des Verbindungselements
- 145: Radiale Richtung des Verbindungselements
- 147: Axiale Erstreckungsachse des ersten Fahrzeugfluidstutzens
- 149: Axiale Erstreckungsachse des zweiten Fahrzeugfluidstutzens
- 151: Erster Öffnungsrand
- 153: Zweiter Öffnungsrand
- 155: Durchmesser des ersten und zweiten Öffnungsrands
- 157: Erste Einführschräge
- 159: Zweite Einführschräge
- 161: Erste Dichtungsaufnahme
- 163: Erstes Dichtungselement
- 165: Zweite Dichtungsaufnahme
- 167: Zweites Dichtungselement
- 169: Erstes Teil der Hülse
- 171: Zweites Teil der Hülse
- 173: Drittes Teil der Hülse
- 175: Erste Verbindungslinie
- 177: Zweite Verbindungslinie
- 179: Achsversatz

## Patentansprüche

1. Verbindungselement (105) zum Herstellen einer Fluidverbindung zwischen zwei Fahrzeugfluidstutzen (101, 103), mit:
einer Hülse (107), welche eine erste Öffnung (109) zum Einführen eines ersten Fahrzeugfluidstutzens (101) begrenzt, und welche eine der ersten Öffnung (109) abgewandte zweite Öffnung (111) zum Einführen eines zweiten Fahrzeugfluidstutzens (103) begrenzt,
wobei die Hülse (107) einen sich von der ersten Öffnung (109) aus erstreckenden ersten Aufnahmeraum (113) zum Aufnehmen des ersten Fahrzeugfluidstutzens (101) und einen sich von der zweiten Öffnung (111) aus erstreckenden zweiten Aufnahmeraum (115) zum Aufnehmen des zweiten Fahrzeugfluidstutzens (103) aufweist,
wobei die Hülse (107) einen umlaufenden Vorsprung (117) aufweist, welcher eine Verbindungsöffnung (119) der Hülse (107) begrenzt, wobei die Verbindungsöffnung (119) den ersten Aufnahmeraum (113) mit dem zweiten Aufnahmeraum (115) fluidtechnisch verbindet,
wobei der erste Aufnahmeraum (113) durch eine erste Innenwandung (121) der Hülse (107) begrenzt ist, welcher einer ersten Außenseite (101-1) des ersten Fahrzeugfluidstutzens (101) zugewandt ist, und wobei der zweite Aufnahmeraum (115) durch eine zweite Innenwandung (123) der Hülse (107) begrenzt ist, welcher einer zweiten Außenseite (103-1) des zweiten Fahrzeugfluidstutzens (103) zugewandt ist,
wobei die erste Innenwandung (121) eine erste Verjüngung (129) aufweist, welche sich in Richtung des umlaufenden Vorsprungs (117) verjüngt, und ausgebildet ist, den ersten Fahrzeugfluidstutzen (101) in dem ersten Aufnahmeraum (113) zu positionieren, und wobei die zweite Innenwandung (123) eine zweite Verjüngung (131) aufweist, welche sich in Richtung des umlaufenden Vorsprungs (117) verjüngt, und ausgebildet ist, den zweiten Fahrzeugfluidstutzen (103) in dem zweiten Aufnahmeraum (115) zu positionieren, und
wobei die erste und zweite Verjüngung (129, 131) ausgebildet sind, eine Bewegung des jeweiligen ersten und zweiten Fahrzeugfluidstutzens (101, 103) innerhalb des jeweiligen ersten und zweiten Aufnahmeraums (113, 115) zuzulassen, um einen Toleranzausgleich zwischen dem ersten und zweiten Fahrzeugfluidstutzen (101, 103) zu ermöglichen.

2. Verbindungselement (105) nach Anspruch 1, wobei die erste Innenwandung (121) einen ersten Mittenabschnitt (125) aufweist, welcher zwischen der ersten Öffnung (109) und dem umlaufenden Vorsprung (117) angeordnet ist, wobei die zweite Innenwandung (123) einen zweiten Mittenabschnitt (127) aufweist, welcher zwischen der zweiten Öffnung (111) und dem umlaufenden Vorsprung (117) angeordnet ist, wobei sich die erste Verjüngung (129) von dem ersten Mittenabschnitt (125) bis zu dem umlaufenden Vorsprung (117) verjüngt, und wobei sich die zweite Verjüngung (131) von dem zweiten Mittenabschnitt (127) bis zu dem umlaufenden Vorsprung (117) verjüngt.

3. Verbindungselement (105) nach Anspruch 1 oder 2, wobei die erste Verjüngung (129) ausgebildet ist, an einem sich verjüngenden ersten Endabschnitt (101-3) der ersten Außenseite (101-1) des ersten Fahrzeugfluidstutzens (101) anzuliegen, um den ersten Fahrzeugfluidstutzen (101) in dem ersten Aufnahmeraum (113) zu positionieren, und/oder wobei die zweite Verjüngung (131) ausgebildet ist, an einem sich verjüngenden zweiten Endabschnitt (103-3) der zweiten Außenseite (103-1) des zweiten Fahrzeugfluidstutzens (103) anzuliegen, um den zweiten Fahrzeugfluidstutzen (103) in dem zweiten Aufnahmeraum (115) zu positionieren.

4. Verbindungselement (105) nach einem der vorangehenden Ansprüche, wobei die erste Verjüngung (129) eine erste Verjüngungskrümmung aufweist, welche identisch zu einer ersten Stutzenkrümmung eines sich verjüngenden ersten Endabschnitts (101-3) der ersten Außenseite (101-1) des ersten Fahrzeugfluidstutzens (101) ist, und wobei die zweite Verjüngung (131) eine zweite Verjüngungskrümmung aufweist, welche identisch zu einer zweiten Stutzenkrümmung eines sich verjüngenden zweiten Endabschnitts (103-3) der zweiten Außenseite (103-1) des zweiten Fahrzeugfluidstutzens (103) ist.

5. Verbindungselement (105) nach einem der vorangehenden Ansprüche, wobei der umlaufende Vorsprung (117) der Hülse (107) einen Innendurchmesser (133) aufweist, welcher geringer als ein Außendurchmesser (135) des ersten Fahrzeugfluidstutzens (101), insbesondere des ersten Stutzendes (101-2) des ersten Fahrzeugfluidstutzens (101), und welcher geringer als ein Außendurchmesser (137) des zweiten Fahrzeugfluidstutzens (103), insbesondere des zweiten Stutzendes (103-2) des zweiten Fahrzeugfluidstutzens (103) ist, um einen Endanschlag für den ersten Fahrzeugfluidstutzen (101) und für den zweiten Fahrzeugfluidstutzen (103) bereitzustellen, oder wobei der umlaufende Vorsprung (117) der Hülse (107) einen Innendurchmesser (133) aufweist, welcher einem Außendurchmesser (135) des ersten Fahrzeugfluidstutzens (101), insbesondere des ersten Stutzendes (101-2) des ersten Fahrzeugfluidstutzens (101), und welcher einem Außendurchmesser (137) des zweiten Fahrzeugfluidstutzens (103), insbesondere des zweiten Stutzendes (103-2) des zweiten Fahrzeugfluidstutzens (103) entspricht, um einen geringen Druckverlust beim Leiten von Fluid zwischen dem ersten und zweiten Fahrzeugfluidstutzens (101, 103) bereitzustellen.

6. Verbindungselement (105) nach einem der vorangehenden Ansprüche, wobei die erste Verjüngung (129) von der ersten Öffnung (109) beabstandet ist, und/oder wobei die zweiten Verjüngung (131) von der zweiten Öffnung (111) beabstandet ist.

7. Verbindungselement (105) nach einem der vorangehenden Ansprüche, wobei die Hülse (107) einen ersten Öffnungsrand (151) aufweist, welcher die erste Öffnung (109) begrenzt, wobei die Hülse (107) einen zweiten Öffnungsrand (153) aufweist, welcher die zweite Öffnung (111) begrenzt, und wobei insbesondere ein Durchmesser (155) des ersten und zweiten Öffnungsrands (151, 153) größer ist als ein Innendurchmesser (133) der Verbindungsöffnung (119) der Hülse (107).

8. Verbindungselement (105) nach Anspruch 7, wobei die Hülse (107) eine erste Einführschräge (157) aufweist, welche sich von dem ersten Öffnungsrand (151) aus in Richtung des ersten Aufnahmeraums (113) verjüngt, um ein Einführen des ersten Fahrzeugfluidstutzens (101) in den ersten Aufnahmeraum (113) zu erleichtern, und wobei die Hülse (107) eine zweite Einführschräge (159) aufweist, welche sich von dem zweiten Öffnungsrand (153) aus in Richtung des zweiten Aufnahmeraums (115) verjüngt, um ein Einführen des zweiten Fahrzeugfluidstutzens (103) in den zweiten Aufnahmeraum (115) zu erleichtern.

9. Verbindungselement (105) nach einem der vorangehenden Ansprüche, wobei in der ersten Innenwandung (121), insbesondere in einem ersten Mittenabschnitt (125), welcher zwischen der ersten Öffnung (109) und dem umlaufenden Vorsprung (117) angeordnet ist, eine erste Dichtungsaufnahme (161) zum Aufnehmen eines ersten Dichtelements (163), insbesondere O-Ring, Blockdichtring oder Zweikomponenten-Silikondichtring, geformt ist, und/oder wobei in der zweiten Innenwandung (123), insbesondere in einem zweiten Mittenabschnitt (127), welcher zwischen der zweiten Öffnung (111) und dem umlaufenden Vorsprung (117) angeordnet ist, eine zweite Dichtungsaufnahme (165) zum Aufnehmen eines zweiten Dichtelements (167), insbesondere O-Ring, Blockdichtring oder Zweikomponenten-Silikondichtring, geformt ist,

10. Verbindungselement (105) nach Anspruch 9, wobei die erste und/oder zweite Dichtungsaufnahme (161, 165) jeweils als eine Nut geformt ist, welche insbesondere neben einer jeweiligen ersten und/oder zweiten Einführschräge (157, 159) in der jeweiligen ersten und/oder zweiten Innenwandung (121, 123) der Hülse (107) angeordnet ist.

11. Verbindungselement (105) nach einem der vorangehenden Ansprüche, wobei die Hülse (107) einstückig ausgebildet ist.

12. Verbindungselement (105) nach einem der Ansprüche 1 bis 10, wobei die Hülse (107) mehrteilig ausgebildet ist, wobei insbesondere ein erstes Teil (169) der Hülse (107) den umlaufenden Vorsprung (117), die erste Verjüngung (129) der ersten Innenwandung (121), die zweite Verjüngung (131) der zweiten Innenwandung (123), insbesondere den ersten Mittenabschnitt (125), und insbesondere den zweiten Mittenabschnitt (127) aufweist, wobei insbesondere ein zweites Teil (171) der Hülse (107) den ersten Öffnungsrand (151) aufweist, wobei insbesondere ein drittes Teil (173) der Hülse (107) den zweiten Öffnungsrand (153) aufweist, wobei das erste Teil (169) der Hülse (107) mit dem zweiten Teil (171) der Hülse (107) stoffschlüssig oder formschlüssig, insbesondere durch eine Clipverbindung, verbunden ist, und wobei das erste Teil (169) der Hülse (107) mit dem dritten Teil (173) der Hülse (107) stoffschlüssig oder formschlüssig, insbesondere durch eine Clipverbindung, verbunden ist.

13. Verbindungselement (105) nach einem der vorangehenden Ansprüche, wobei die Hülse (107) als ein Spritzgussformteil geformt ist, und/oder wobei die Hülse (107) aus einem Thermoplasten, insbesondere Polyamid, oder einem Metall, insbesondere Aluminium oder Stahl, geformt ist.

14. Fahrzeugfluidverbindungsanordnung (100), umfassend ein Verbindungselement (105) nach einem der vorangehenden Ansprüche, einen ersten Fahrzeugfluidstutzen (101) und einen zweiten Fahrzeugfluidstutzen (103),
wobei der erste Fahrzeugfluidstutzen (101) in dem ersten Aufnahmeraum (113) bewegbar aufgenommen ist, wobei der zweite Fahrzeugfluidstutzen (103) in dem zweiten Aufnahmeraum (115) bewegbar aufgenommen ist, um einen Toleranzausgleich zwischen dem ersten und zweiten Fahrzeugfluidstutzen (101, 103) zu ermöglichen.

15. Fluidverbindungsanordnung (100) nach Anspruch 14, wobei der jeweilige Fahrzeugfluidstutzen (101, 103) innerhalb des jeweiligen Aufnahmeraums (113, 115) entlang einer axialen Richtung (143) des Verbindungselements (105) bewegbar aufgenommen ist, um ein Strecken und Stauchen der Fahrzeugfluidverbindungsanordnung (100) zu ermöglichen, und/oder
wobei der jeweilige Fahrzeugfluidstutzen (101, 103) innerhalb des jeweiligen Aufnahmeraums (113, 115) entlang einer radialen Richtung (145) des Verbindungselements (105) bewegbar aufgenommen ist, um einen Achsversatz zwischen dem ersten und zweiten Fahrzeugfluidstutzen (101, 103) zu ermöglichen, und/oder
wobei der jeweilige Fahrzeugfluidstutzen (101, 103) innerhalb des jeweiligen Aufnahmeraums (113, 115) abwinkelbar angeordnet ist, um zu ermöglichen, dass die jeweiligen axialen Erstreckungsachsen (147, 149) des ersten und zweiten Fahrzeugfluidstutzens (101, 103) winklig zueinander verlaufen.
